# EUROPÄISCHE PATENTSCHRIFT

(11) **EP 1 172 594 B1**
(45) Veröffentlichungstag und Bekanntmachung des Hinweises auf die Patenterteilung: **16.03.2005**
(21) Anmeldenummer: 01112595.2
(22) Anmeldetag: 23.05.2001
(51) Int. Cl.: F16L 19/02, F16L 55/027

(54) **Vorrichtung zum Löschen von Bränden**
Apparatus for extinguishing fires
Dispositif d'extinction de feux

(30) Priorität: 12.07.2000 DE 10033731; 06.09.2000 DE 10043916
(43) Veröffentlichungstag der Anmeldung: 16.01.2002
(73) Patentinhaber: Wagner Alarm- und Sicherungssysteme GmbH, 30853 Langenhagen (DE)
(72) Erfinder: Preiss, Raymund, 31157 Sarstedt (DE); Lensing, Clemens, 30916 Isernhagen (DE)
(74) Vertreter: Rupprecht, Kay, Dipl.-Ing.

(56) Entgegenhaltungen:
- EP-A- 0 882 471
- DE-C- 501 521
- DE-U- 9 106 441
- US-A- 2 179 355
- US-A- 2 937 891
- US-A- 3 665 965
- US-A- 5 038 867

## Beschreibung

Die Erfindung betrifft eine Vorrichtung zur Bereitstellung von Gasen, mit einem Gasvorrat und vorgefertigten Leitungskomponenten. Die Erfindung betrifft vorzugsweise eine Vorrichtung zum Löschen von Bränden in geschlossenen Räumen, mit einem Gasvorrat für Inert-Druckgas und einem Rohrleitungssystem zur Einleitung des Inert-Druckgases von einem Gasvorrat in die geschlossenen Räume, wobei das Rohrleitungssystem aus vorgefertigten Leitungskomponenten besteht, welche mit Verbindungselementen zusammengehalten werden.

Aus der EP 0 882 471 A2 ist eine Vorrichtung bekannt, die als Feuerlöschanlage dient. Diese wird mit einem in Gasflaschen gefüllten Hochdruck-Löschgas betrieben und weist ein Rohrsystem mit Sammelrohren und mit Löschventilen auf, an denen im Brandfall das Löschgas austreten kann. Das Rohrsystem besteht dabei aus baukastenförmig vorgefertigten verschraubbaren rohrförmigen Einzelteilen, die an den Enden mit Rechts- und Linksgewinde versehen und mittels Gewindemuffen mit Rechts- und Linksgewinde miteinander verbindbar sind. Durch die baukastenmässig vorgefertigten, verschraubbaren rohrförmigen Einzelteile werden Herstellungs- und Montagezeiten verringert.

Um die Dichtigkeit des Hochdruckbereiches zu überprüfen, ist aufgrund der Art der Verbindung der Einzelteile bislang allerdings eine Wasserdruckprobe bei 310 bar notwendig. Die dabei unvermeidbaren Wasserrückstände in den Rohren führen zu Langzeitschäden durch Rosten. Wird außerdem eine Undichtigkeit festgestellt, müssen alle Hochdruckkomponenten auseinandergenommen werden, um sie wieder abzudichten und neu zusammenzuschrauben. Dies wird dadurch erschwert, daß bei Austausch von Einzelteilen in Folge von Reparatur- oder Erweiterungsarbeiten das Rohrsystem im Umfeld der betreffenden Stelle aus den Verankerungen gelöst werden muss, um ein Ab- und Wiederandrehen der Gewindemuffen zu ermöglichen. Bei der erneuten Wasserdruckprobe wieder eine Undichtigkeit an einer anderen Stelle auftreten kann, wodurch der Montageaufwand unkalkulierbar wird. Die zunächst erzielten Vorteile bei Herstellung und Montage werden also durch nachfolgend anfallende Aufwendungen wieder zunichte gemacht. Zudem sind die Gewindemuffen relativ kompliziert herzustellen, da ein gegenläufiges Innengewinde so bis zur Mitte der Muffe geschnitten werden muss, dass die damit verbundenen Rohrenden auf Stoß gezogen werden können. Die Verbindung der Einzelteile erfordert zudem die Beachtung der jeweils zugehörigen Gewinde von Rohr und Gewindemuffe, welche dem Monteur entsprechend kenntlich gemacht werden müssen.

Die hier geschilderten Nachteile werden in der Brandschutztechnik bislang durch keine bekannte Vorrichtung gelöst.

Aus der US-A-2 937 891 ist eine Vorrichtung mit einem Dichtnopf nach dem Oberbegriff des Anspruch 1 bekannt.

Es ist deshalb die Aufgabe der vorliegenden Erfindung, eine Vorrichtung zur Bereitstellung von Gasen, beziehungsweise zum Löschen von Bränden in geschlossenen Räumen der eingangs genannten Art anzugeben, die von vornherein eine Dichtigkeit gewährleistet, welche die Durchführung der Montage, sowie von Wartungs- und Umbaumaßnahmen an der Anlage, unter Verwendung baukastenmässig vorgefertigter und einfach aufgebauter Leitungskomponenten, schnell, vielseitig und kostengünstig macht.

Diese Aufgabe wird durch eine Vorrichtung nach Patentanspruch 1, sowie durch deren Verwendung nach Anspruch 9, gelöst.

Gegenstand der vorliegenden Erfindung nach Anspruch 1 ist eine Vorrichtung der eingangs genannten Art zur Bereitstellung von Gasen, bei welcher jede Leitungskomponente mit jeder anderen Leitungskomponente unter Verwendung eines Verbindungselementes, bestehend aus einem Gewindekopf, einem Dichtkopf und einer Überwurfmutter dichtend verbunden wird.

Diese Art der Verbindung gewährleistet eine Dichtigkeit, die nur noch eine Gasdruckprobe zur Dichtigkeitsprüfung erforderlich macht. Falls nun eine Undichtigkeit festgestellt wird, ist lediglich ein Nachziehen der Überwurfmutter ausreichend. Außerdem werden die geschilderten Korrosionsprobleme durch eine Wasserdruckprobe vermieden. Die Verbindung unterstützt weiterhin in idealer Weise den baukastenförmige Aufbau der Leitungskomponenten eines Rohrleitungssystems, da nun nicht nur mehr die Montage, sondern auch die Wartung und der Umbau ohne zusätzliche Aufwendungen durchgeführt werden können. Ein Auseinanderziehen der Leitungskomponenten und in der Folge ein Lösen der Verankerungen ist nicht mehr nötig.

Vorzugsweise umfaßt die vorliegende Erfindung auch eine Vorrichtung zum Löschen von Bränden, wobei der Gewindekopf auf einem ersten Rohrende sitzt und ein Außengewinde aufweist, die Überwurfmutter auf einem zweiten, an das erste Rohrende anzuschließenden Rohrende sitzt, und wobei zwischen den beiden Rohrenden der Dichtkopf angeordnet ist, der die Verbindungsstelle zwischen den Rohrenden nach Anziehen der Überwurfmutter dichtend abschließt.

Auch hier unterstützt die Art der Verbindung in idealer Weise die baukastenmäßige Struktur des Rohrleitungssystems mit den vorangehend geschilderten Vorteilen.

Vorteilhafte Weiterbildungen der Erfindung sind in den anderen Unteransprüchen angegeben.

Die vorliegende Erfindung bietet den Vorteil, dass in die Verbindungselemente des Rohrleitungssystems eine Druckreduzierblende eingeschlossen ist. Dieses Bauelement war bislang als eigenes Leitungselement bekannt und wurde auch gesondert montiert. Durch die Integration der Druckreduzierblende in die Verbindungselemente an der Stelle, wo ein Übergang von einem Hochdruckbereich in einen Niederdruckbereich erfolgen soll, entfallen Herstellungskosten für ein gesondertes Drosselelement und die entsprechenden Montageaufwendungen.

Da diese Druckreduzierblende in einen zum Gewindekopf offenen Sitz im Dichtkopf eingesetzt, also wechselbar verbaut ist, ergeben sich weitere Vorteile. Je nach Bedarf können Dichtköpfe mit Druckreduzierblenden verschiedener Öffnungsweiten und damit Drosselwirkungen versehen, und darüber hinaus im nachhinein ohne weiteren Aufwand auch gewechselt und einer neuen Anlagenauslegung angepasst werden.

Der Übergang vom Durchmesser des Hochdruckrohres auf den Durchmesser des Niederdruckrohres hinter der Druckreduzierblende wird dabei über einen Ring mit trichterförmig zum Niederdruckrohr hin abnehmendem Innendurchmesser gewährleistet. Dieser Ring ist in das Verbindungselement integriert und sitzt zwischen Dichtkopf und Überwurfmutter, wodurch gesonderte Leitungskomponenten für diese Funktion entfallen.

Die Verbindungselemente des Rohrleitungssystems beinhalten eine Radialdichtung, die zwischen dem Dichtkopf und dem Gewindekopf angeordnet ist. Durch Anziehen der Überwurfmutter werden die außenliegende Fläche des Dichtkopfes und die innenliegende Fläche des Gewindekopfes übereinander gezogen, wodurch die gerade in diesem Bereich sitzenden Dichtung zwischen beiden Flächen zusammengepresst wird und eine optimale Dichtleistung erzielt.

Die zur Aufnahme der Radialdichtung dort verlaufende Ringnut am Dichtkopf macht, zusammen mit dem eingearbeiteten Sitz für die Druckreduzierblende, nur dieses Teil des gesamten Verbindungselementes der Leitungskomponenten geringfügig aufwendiger in der Herstellung, während Überwurfmutter und Gewindekopf einfach gestaltet sind.

Das im vorhinein beschriebene Verbindungselement mit seinen vorteilhaften Ausprägungen kommt in einer Anordnung zum Einsatz, die der Bereitstellung von Gasen aus einem Gasvorrat dient und aus vorgefertigten Leitungskomponenten, sowie Steuer, Regel- und Messkomponenten besteht, die einen Gashochdruck- und einen Gasniederdruckbereich bilden. Gerade die Bildung verschiedener Druckbereiche wird durch die Integration der Druckreduzierblenden in die Verbindungselemente ideal unterstützt. In einer solchen Anordnung werden die Verbindungselemente nicht nur im starren Rohrsystem eingesetzt, sondern auch bei der Anbindung des Gasvorrats an eine Sammelleitung mittels eines auf einen erfindungsgemäßen Dichtkopf aufgezogenen Hochdruckschlauchs, welcher auf einen radial an einer Leitungskomponente angebrachten Gewindestutzen geschraubt wird. Steuer-, Regelund Messkomponenten können in ähnlicher Weise angeschlossen werden, wodurch die Variabilität der hier beschriebenen Anordnung erhöht wird.

Eine solche Anordnung kann, wenn sie die Installation eines Gasvorrats mit einer oder mehreren Gasflaschen zulässt, die mit dem Hochdruckbereich verbunden sind, besonders leicht an wechselnde Gegebenheiten, wie Gebäudeaus- oder Umbauten, angepasst werden.

Durch den Einsatz einer Bereichsstation am Übergang zwischen Gashoch- und Gasniederdruckbereich werden im Brandfall mittels elektrischer Ansteuerung Ventile zum betroffenen Bereich geöffnet. Andere Bereichsventile bleiben geschlossen, damit der gesamte Gasvorrat in den Bereich geleitet wird, in dem der Brand entstanden ist. Dabei wird eine Steuerleitung benutzt, um die Öffnung der Bereichsventile zu verzögern oder ganz zu sperren. Die benötigte Gasmenge wird vorher berechnet und vorgehalten. Falls die überwachten Bereiche unterschiedliche Löschgasmengen erfordern, werden zusätzlich Gruppensteuerventile eingesetzt, die elektrisch von einer Zentrale angesteuert werden.

Durch die Flexibilität der Anordnung auf Grund der Gestaltung der erfindungsgemäßen Vorrichtung und der sich daraus ergebenden Auslegungsspielräume bei Anlagenkonzeption und -betrieb ist eine Verwendung der hier beschriebenen Anordnung insbesondere in einer Feuerlöschanlage vorgesehen.

Nachfolgend wird die Erfindung anhand eines Ausführungsbeispiels beschrieben, welches anhand der Abbildungen näher erläutert wird. Hierbei zeigen:
- Fig. 1: eine Anordnung einer Feuerlöschanlage, in der die erfindungsgemäßen Leitungskomponenten (4) eingesetzt werden;
- Fig. 2: eine zweite Anordnung einer Feuerlöschanlage mit einer Bereichsstation (42), in der die erfindungsgemäßen Leitungskomponenten (4) eingesetzt werden;
- Fig. 3: eine Hochdruck-Leitungskomponente (4) mit Verbindungselementen (6) gemäß der Erfindung;
- Fig. 4: eine Hochdruck-Leitungskomponente (4) mit Verbindungselementen (6) gemäß der Erfindung; und
- Fig. 5: ein erfindungsgemäßes verschraubtes Verbindungselement (6).

Für gleiche oder gleich wirkende Teile werden im folgenden die gleichen Bezugsziffern verwendet.

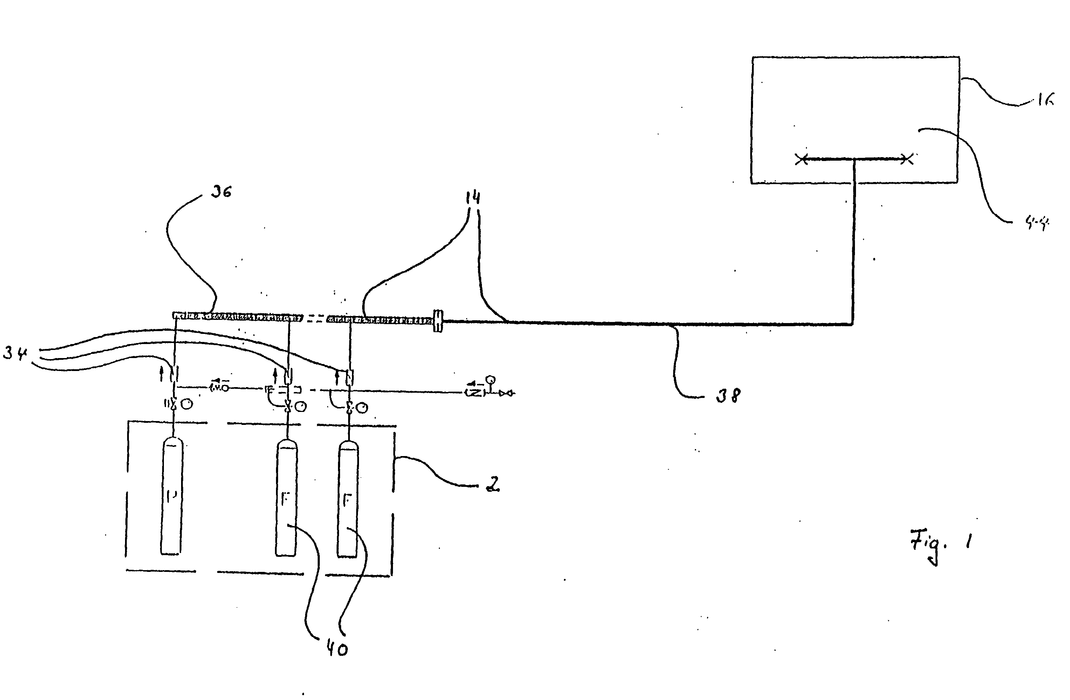

Figur 1 zeigt die Anordnung einer Feuerlöschanlage, in der die erfindungsgemäßen Leitungskomponenten (4) eingesetzt werden. Ein Rohrleitungssystem (14) verbindet einen Gasvorrat (2), bestehend aus mehreren Gasflaschen (40), mit einem Abgabebereich (44) in einem geschlossenen Raum (16). Unterteilt ist die Anordnung in einen Hochdruckbereich (36) und einen Niederdruckbereich (38). Die Gasflaschen (40) sind unter Verwendung von Steuer- Regel- und Messkomponenten (34) an den Hochdruckbereich (36) gekoppelt. Als Löschgas werden Inert-Gase wie Stickstoff oder Argon eingesetzt. Im Brandfall wird bei dieser Anordnung zuerst eine Pilot-Gasflasche P geöffnet, in der Folge dann die weiteren Flaschen F, wobei das Gas druckreduziert dem Abgabebereich (44) zugeleitet wird.

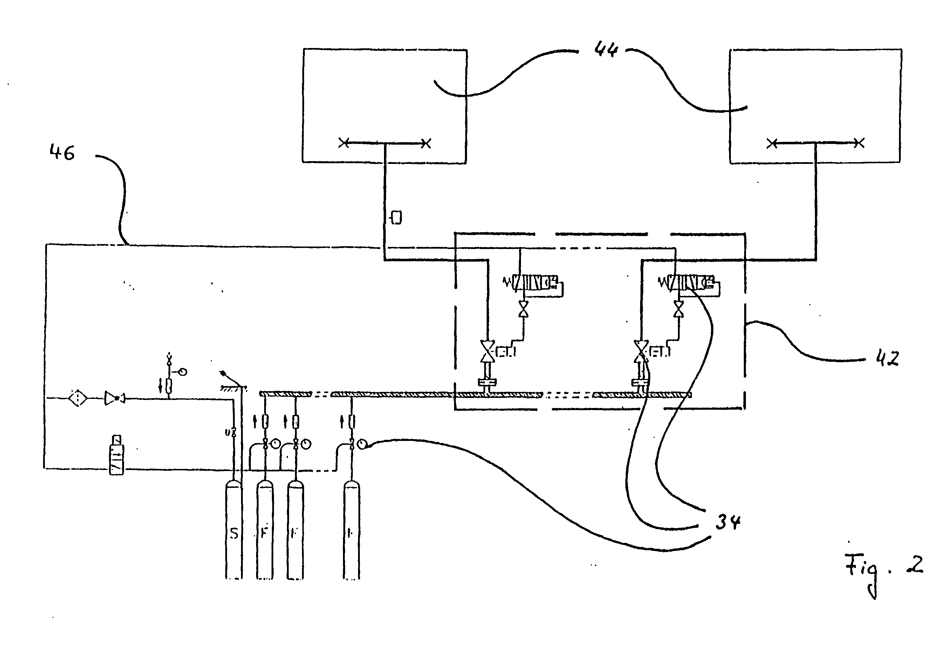

Figur 2 zeigt eine zweite Anordnung einer Feuerlöschanlage mit einer Bereichsstation (42), in der die erfindungsgemäßen Komponenten eingesetzt werden. Mit Hilfe der Bereichsstation (42) wird im Brandfall, wieder unter Verwendung von Steuer- Regelund Messkomponenten (34), eine geregelte Zufuhr von Inert-Druckgas in den Abgabebereich (44) hinein vorgenommen. Anders als in Figur 1 gezeigt, wird hier allerdings eine Rückmeldung über die angeforderte Menge an Löschgas über eine Steuerleitung (46) an den Gasvorrat vorgenommen. Damit kann eine gezielte Zuoder Abschaltung von Gasflaschen vorgenommen werden.

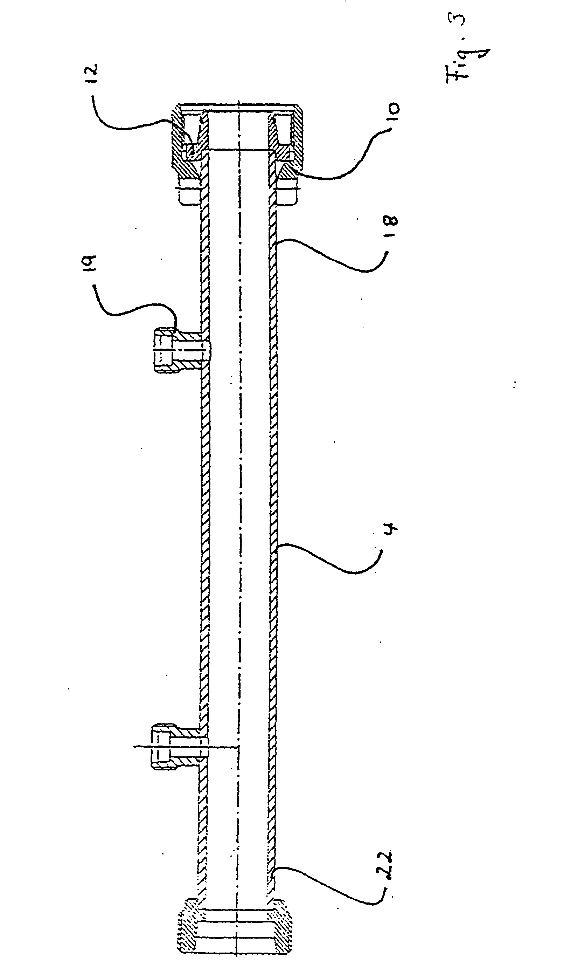

Figur 3 zeigt eine Hochdruck-Leitungskomponente (4) mit Verbindungselementen gemäß der Erfindung. An einem Rohrende (22) ist dabei ein Gewindekopf (8), und an einem anderen Rohrende (18) ein Dichtkopf (12) und eine Überwurfmutter (10) angeordnet.

Über die radial zur Längsachse der Hochdruck-Leitungskomponente (4) angebrachten Gewindestutzen (19) werden die Gasflaschen (40) mittels eines Hochdruckschlauchs (nicht dargestellt) an das als Sammelrohr dienende Rohrstück angeschlossen. Auch für diesen Anschluss werden die Verbindungselemente gemäß der Erfindung benutzt, wodurch keine gesonderten Bauelemente benötigt werden.

Figur 4 zeigt eine Hochdruck-Leitungskomponente (4) mit Verbindungselementen gemäß der Erfindung. Zu erkennen ist insbesondere der in dem Verbindungselement (6) zwischen dem Dichtkopf (12) und der Überwurfmutter (10) angeordnete Ring (29), welcher den Übergang zwischen dem Rohrdurchmesser des Hochdruckbereiches (36) und dem Rohrdurchmesser des Niederdruckbereiches (38) ermöglicht. Dadurch werden gesonderte Leitungselemente, die eine Kopplung zwischen Rohren des Hoch- und des Niederdruckbereiches ermöglichen, nicht mehr notwendig. Dieser Übergang ist nun in das Verbindungselement (6) selbst integriert.

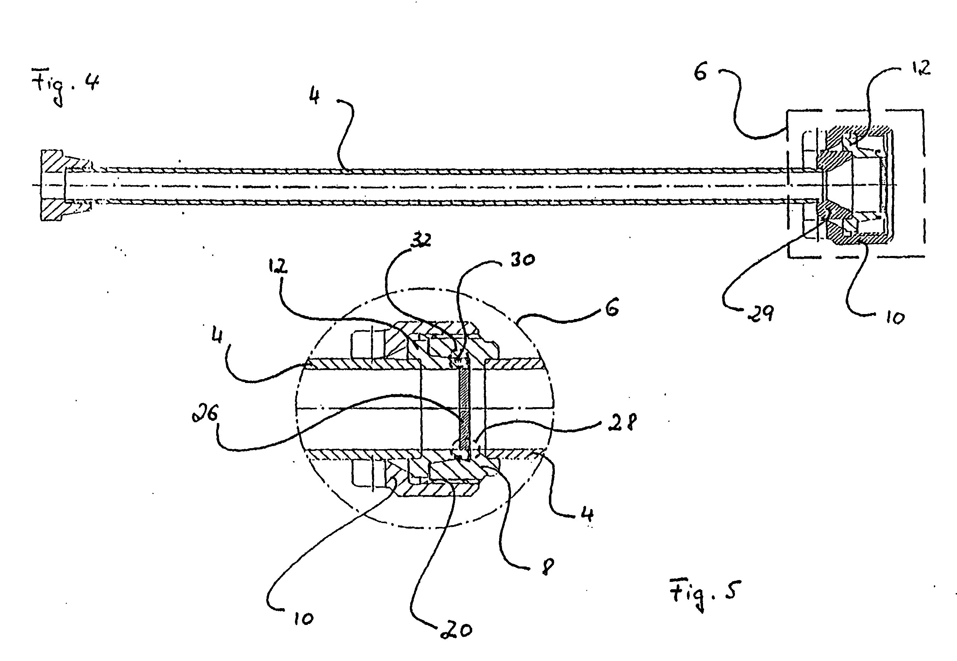

Figur 5 zeigt ein erfindungsgemäßes verschraubtes Verbindungselement (6), welches eine am Dichtkopf (12) in einem Sitz (28) untergebrachte Druckreduzierblende (26) aufweist. Eine Radialdichtung (30) zwischen der Innenfläche des Gewindekopfes (8) und der Außenfläche des Dichtkopfes (12), welche in einer Ringnut (32) verläuft, dichtet nach Anziehen der Überwurfmutter (10) auf das Außengewinde (20) des Gewindekopfes (8) die Hochdruck-Leitungskomponenten (4) nach außen ab. Besonders gute Dichteigenschaft werden dabei insbesondere durch die konische Form der Kontaktflächen zwischen Gewinde- (8) und Dichtkopf (12) erzielt, die bei Anzug der Überwurfmutter (10) eine zunehmende Flächenpressung auf die Radialdichtung (30) ausüben. Durch den - nach Lösen der Überwurfmutter (10) - leicht zugänglichen Sitz (28) ist die Druckreduzierblende (26) ohne Aufwand zu entnehmen oder zu wechseln.

### Bezugszeichenliste

- 2: Gasvorrat
- 4: Leitungskomponente
- 6: Verbindungselement
- 8: Gewindekopf
- 10: Überwurfmutter
- 12: Dichtkopf
- 14: Rohrleitungssystem
- 16: Geschlossene Räume
- 18: Erstes Rohrende
- 19: Gewindestutzen
- 20: Außengewinde
- 22: Zweites Rohrende
- 26: Druckreduzierblende
- 28: Sitz
- 29: Ring
- 30: Radialdichtung
- 32: Ringnut
- 34: Steuer-Regel- und Meßkomponente
- 36: Gashochdruckbereich
- 38: Gasniederdruckbereich
- 40: Gasflaschen
- 42: Bereichsstation
- 44: Abgabebereich
- 46: Steuerleitung

## Patentansprüche

1. Vorrichtung zur Bereitstellung von Gasen, mit vorgefertigten Leitungskomponenten (4), wobei jede Leitungskomponente (4) mit jeder anderen Leitungskomponente mittels eines Verbindungselements (6), bestehend aus einem Gewindekopf (8), einem Dichtkopf (12) und einer Überwurfmutter (10) dichtend verbunden wird,
**gekennzeichnet durch**
wenigstens eine Druckreduzierblende (26), die in einen zum Gewindekopf (8) offenem Sitz (28) im Dichtkopf (12) eingesetzt ist, und **durch** einen Gasvorrat (2), aus welchem das die Leitungskomponenten (4) durchfließende Gas bereitgestellt wird.

2. Vorrichtung nach Anspruch 1,
**dadurch gekennzeichnet,dass**
die Vorrichtung zum Löschen von Bränden in geschlossenen Räumen, mit einem Gasvorrat (2) für Inert-Druckgas und mit einem Rohrleitungssystem (14), gebildet aus den mittels der Verbindungselemente (6) verbundenen Leitungskomponenten (4), zur Einleitung des Inert-Druckgases von dem Gasvorrat (2) in die geschlossenen Räume (16), ausgebildet ist, wobei der Gewindekopf (8) auf einem ersten Rohrende (18) sitzt und ein Außengewinde (20) aufweist, die Überwurfmutter (10) auf einem zweiten, an das erste Rohrende (18) anzuschließenden Rohrende (22) sitzt, und der Dichtkopf (12) derart angeordnet ist, das er die Verbindungsstelle zwischen den Rohrenden (18,22) nach Anziehen der Überwurfmutter (10) dichtend abschließt.

3. Vorrichtung nach Anspruch 1 oder 2,
**dadurch gekennzeichnet, dass**
ein Verbindungselement (6) zur Verbindung von Leitungskomponenten (4) verschiedenen Durchmessers einen zwischen Dichtkopf (12) und Überwurfmutter (10) sitzenden Ring (29) mit trichterförmig zulaufendem Innendurchmesser aufweist.

4. Vorrichtung nach einem der Ansprüche 1 bis 3,
**dadurch gekennzeichnet, dass**
die Verbindungselemente (6) des Rohrleitungssystems eine Radialdichtung (30) beinhalten, die zwischen dem Dichtkopf (12) und dem Gewindekopf (8) angeordnet ist.

5. Vorrichtung nach Anspruch 4,
**dadurch gekennzeichnet, dass**
die Radialdichtung (30) in einer zum Gewindekopf (8) offenen Ringnut (32) am Dichtkopf (12) sitzt.

6. Vorrichtung nach einem der vorhergehenden Ansprüche,
**dadurch gekennzeichnet,dass**
die Vorrichtung wenigstens eine Steuer-, Regel- und/oder Messkomponente (34) aufweist und einen Gashoch- und einen Gasniederdruckbereich (36,38) bildet.

7. Vorrichtung nach Anspruch 6,
**dadurch gekennzeichnet dass**
der Gasvorrat (2) aus einer oder mehrerer Gasflaschen (40) besteht, welche mit dem Hochdruckbereich (36) verbunden sind.

8. Vorrichtung nach Anspruch 6 oder 7,
**dadurch gekennzeichnet , dass** an einem Übergang zwischen dem Gashoch- und dem Gasniederdruckbereich (36,38) eine Bereichstation (42) die Regelung der Gaszufuhr aus dem Gasvorrat (2) in einen Abgabebereich (44) hinein über eine Steuerleitung (46) zulässt.

9. Verwendung einer Vorrichtung nach Anspruch 1 in einer Feuerlöschanlage.

## Claims

1. Device for the provision of gases, with prefabricated conduit components (4), whereby each conduit component (4) is imperviously connected to every other conduit component via a connector (6), consisting of a threaded head (8), a sealing joint (1) and a union nut (10),
**characterised by**
at least one pressure restrictor (26) located in a seating (28) in the sealing joint (12) open to the threaded head (8), and by a gas reservoir (2) from which gas flowing through the conduit components (4) is made available.

2. The device according to Claim 1,
**characterised in that**
the device for fighting fires in enclosed areas has a gas reservoir (2) for inert compressed gas and a conduit system (14), comprised of the conduit components (4) linked by the connectors (6), to introduce inert compressed gas from the gas reservoir (2) into the enclosed areas (16), whereby the threaded head (8) is located on a first tube end (18) and has an exterior thread (20), that the union nut (10) is located on a second tube end (22) which is to be attached to the first tube end (18), and that the threaded head (12) is constructed in such a way that it imperviously seals the junction between the tube end (18, 22) when the union nut (10) is tightened.

3. The device according to Claim 1 or 2,
**characterised in that**
a connector (6) has a ring (29) located between the threaded head (12) and union nut (10) with a funnel-shaped interior diameter, which connects conduit components (4) of varying diameters.

4. The device according to one of Claims 1 to 3,
**characterised in that**
the connectors (6) of the conduit system include a radial seal (30) located between the sealing head (12) and the threaded head (8).

5. The device according to Claim 4,
**characterised in that**
the radial seal (30) is located in an open ring groove (32) at the sealing joint (12) which is open towards the threaded head (8).

6. The device according to one of the foregoing Claims,
**characterised in that**
the device has at least one control, regulation and/or measuring component (34), and forms a gas high-pressure and a gas low-pressure zone (36, 38).

7. The device according to Claim 6,
**characterised in that**
the gas reservoir (2) consists of one or multiple gas canisters (40) which are connected to the high-pressure zone (36).

8. The device according to Claim 6 or 7,
**characterised in that**
at a junction between the gas high-pressure and gas low-pressure zones (36, 38) a zone terminal (42) permits the dispensing of gas from the gas reservoir (2) into the dispense zone (44) to be controlled by means of a control line (46).

9. Use of a device according to Claim 1 in a fire-fighting installation.

## Revendications

1. Dispositif de mise à disposition de gaz comprenant des composants de canalisation (4) préfabriqués, chaque composant de canalisation (4) étant relié de manière étanche à chacun des autres composants de canalisation au moyen d'un élément de liaison (6) composé d'une tête filetée (8), d'une tête d'étanchéité (12) et d'un écrou d'accouplement (10), **caractérisé par** au moins un obturateur de réduction de pression (26), qui est placé dans la tête d'étanchéité (12) dans un siège (28) ouvert vers la tête filetée (8), et par un réservoir de gaz (2), à partir duquel est mis à disposition le gaz circulant à travers les composants de canalisation (4).

2. Dispositif selon la revendication 1, **caractérisé en ce que** le dispositif d'extinction d'incendie dans des locaux fermés est réalisé avec un réservoir de gaz (2) pour un gaz inerte sous pression et avec un système de canalisation (14) formé par les composants de canalisation (4), reliés au moyen des éléments de liaison (6) et destinés à acheminer le gaz inerte sous pression à partir du réservoir de gaz (2) dans les locaux fermés (16), la tête filetée (8) étant posée sur une première extrémité de tube (18) et comportant un filetage (20), l'écrou d'accouplement (10) étant posé sur une deuxième extrémité de tube (22) à raccorder à la première extrémité de tube (18), et la tête d'étanchéité (12) étant agencée de telle sorte qu'elle ferme de manière étanche la zone de liaison entre les extrémités de tube (18, 22) après le serrage de l'écrou d'accouplement (10).

3. Dispositif selon la revendication 1 ou 2, **caractérisé en ce que** l'élément de liaison (6), destiné à relier les composants de canalisation (4) de diamètres différents, comporte une bague (29), montée entre la tête d'étanchéité (12) et l'écrou d'accouplement (10) et ayant un diamètre intérieur se rétrécissant en forme de cône.

4. Dispositif selon l'une quelconque des revendications 1 à 3, **caractérisé en ce que** les éléments de liaison (6) du système de canalisation contiennent une garniture d'étanchéité radiale (30), qui est agencée entre la tête d'étanchéité (12) et la tête filetée (8).

5. Dispositif selon la revendication 4, **caractérisé en ce que** la garniture d'étanchéité radiale (30) est posée sur la tête d'étanchéité (12) dans une rainure annulaire (32) ouverte vers la tête filetée (8).

6. Dispositif selon l'une quelconque des revendications précédentes, **caractérisé en ce que** le dispositif comporte au moins un composant de commande, de réglage et/ou de mesure (34) et forme une zone de haute pression de gaz (36) et une zone de basse pression de gaz (38).

7. Dispositif selon la revendication 6, **caractérisé en ce que** le réservoir de gaz (2) se compose d'une ou de plusieurs bouteilles de gaz (40), qui sont reliées à la zone de haute pression (36).

8. Dispositif selon la revendication 6 ou 7, **caractérisé en ce qu'**un poste de régime (42), dans une zone de transition entre la zone de haute pression de gaz (36) et la zone de basse pression de gaz (38), autorise le réglage de l'acheminement du gaz hors du réservoir de gaz (2) vers l'intérieur d'une zone de distribution (44) par l'intermédiaire d'une ligne de commande (46).

9. Utilisation d'un dispositif selon la revendication 1 dans une installation d'extinction d'incendie.
